# EUROPÄISCHE PATENTANMELDUNG

(11) **EP 2 058 912 A1**
(43) Veröffentlichungstag der Anmeldung: **13.05.2009**
(21) Anmeldenummer: 08017446.9
(22) Anmeldetag: 04.10.2008
(51) Int. Cl.: H02G 3/30

(54) **Befestigungsband für elektrische Bauteile**

(30) Priorität: 09.11.2007 DE 202007015616 U
(71) Anmelder: Hugo Brennenstuhl GmbH & Co. KG, 72074 Tübingen (DE)
(72) Erfinder: Brennenstuhl, Hugo, 72074 Tübingen (DE)
(74) Vertreter: Vogler, Bernd

(57) **Zusammenfassung**

Bei einem Befestigungsband für elektrische Bauteile, insbesondere Steckdosenleisten (12) oder dergleichen, mit einem Bandkörper (13) mit im Wesentlichen konstanter Dicke aus biegeflexiblem Bandmaterial, dessen einem Endabschnitt (14) eine Verschlussöffnung (15) zugeordnet ist, in die ein dem Endabschnitt (14) gegenüberliegender, mit Rastelementen (16) versehener Rast-Endabschnitt (17) rastend einführbar ist, wodurch das Befestigungsband (11) in eine das elektrische Bauteil als geschlossene Ringstruktur umschließende Gebrauchslage überführbar ist, ist die Verschlussöffnung unmittelbar am Bandkörper (13), diesen quer zu einer Bandkörperebene durchsetzend, ausgebildet.

## Beschreibung

Die Erfindung betrifft ein Befestigungsband für elektrische Bauteile, insbesondere Steckdosenleisten oder dergleichen, mit einem Bandkörper mit im Wesentlichen konstanter Dicke aus biegeflexiblem Material, dessen einem Endabschnitt eine Verschlussöffnung zugeordnet ist, in die ein dem Endabschnitt gegenüberliegender, mit Rastelementen versehener Rast-Endabschnitt rastend einführbar ist, wodurch das Befestigungsband in eine das elektrische Bauteil als geschlossene Ringstruktur umschließende Gebrauchslage überführbar ist.

Derartige Befestigungsbänder sind bereits seit langem, beispielsweise als sogenannte Kabelbinder bekannt. Die Verschlussöffnung derartiger Kabelbinder befindet sich an einem separat am Bandkörper angespritzten Verschlusskörper. Der Verschlusskörper erfordert bei der Herstellung einen gesonderten Arbeitsschritt oder ein speziell geformtes Werkzeug, was die Herstellung des Kabelbinders relativ aufwändig und somit relativ teuer macht.

Aufgabe der Erfindung ist es, ein Befestigungsband der eingangs erwähnten Art zu schaffen, das kostengünstiger herstellbar ist.

Diese Aufgabe wird durch ein Befestigungsband mit den Merkmalen des unabhängigen Anspruchs 1 gelöst. Weiterbildungen der Erfindung sind in den Unteransprüchen dargestellt.

Das erfindungsgemäße Befestigungsband zeichnet sich dadurch aus, dass die Verschlussöffnung unmittelbar im Bandkörper, diesen quer zu einer Bandkörperebene durchsetzend, ausgebildet ist.

Es ist also nicht mehr notwendig, einen separaten Verschlusskörper anzuformen. Die Verschlussöffnung befindet sich also direkt im Bandkörper und ist dadurch relativ einfach herzustellen, beispielsweise kann sie in einfacher Weise aus dem Bandmaterial ausgestanzt bzw. ausgeschnitten werden. Bei herkömmlichen Kabelbindern verursacht der Verschlusskörper eine Dickenvergrößerung, so das der Kabelbinder nicht mehr insgesamt als flaches Bauteil ausgestaltet ist. Das erfindungsgemäße Befestigungsband hingegen ist in seiner Nichtgebrauchslage, in der die beiden Endabschnitte nicht zusammengefügt sind, flach ausgestaltet, was auch Vorteile bei der Stapelbarkeit bringt.

In besonders bevorzugter Weise ist das Befestigungsband in einfacher Weise, insbesondere per händisch aufgebrachter Zugkraft, wieder in seine Nichtgebrauchslage zu überführen, d.h. der Verschluss zu dem die Verschlussöffnung und die Rastelemente gehören, kann wieder geöffnet werden. Dadurch ist eine Wiederverwendung des Befestigungsbandes gewährleistet. Dagegen können die aus dem Stand der Technik bekannten Kabelbinder in der Regel nicht mehr geöffnet werden oder falls doch nur unter größtem Kraftaufwand oder durch Einsatz eines in den Verschlusskörper eingreifenden Hilfswerkzeugs.

In besonders bevorzugter Weise weist der Bandkörper eine mit Abstand hinter der Verschlussöffnung angeordnete Schlupföffnung zur Aufnahme des in der Gebrauchslage über die Verschlussöffnung hinausstehenden Teiles des Rast-Endabschnitts auf. Dadurch ist es möglich, dass das überstehende Band-Ende in der Gebrauchslage in die geschlossene Ringstruktur des Befestigungsbandes integriert wird. Dies sorgt dafür, dass das Band-Ende nicht störend von der Außenseite des Befestigungsbandes absteht, was für die Handhabung des mit dem Befestigungsband umschlossenen elektrischen Bauteiles und auch aus ästhetischen Gesichtspunkten nachteilig ist.

Bei einer Weiterbildung der Erfindung weist der Rast-Endabschnitt einen frei von Rastelementen ausgebildeten Kopfbereich auf, an den sich ein mit den Rastelementen versehener Rastbereich anschließt. Der rastelementfreie Kopfbereich ermöglicht also ein einfaches und schnelles Einfädeln in die Verschlussöffnung. Ferner kann durch Handhabung am Kopfbereich ein Festzurren des Befestigungbandes in die gewünschte Umschließungslage um das elektrische Bauteil erfolgen.

Zweckmäßiger Weise ist der rastelementfreie Kopfbereich mindestens so lang wie der Abstand zwischen der Verschluss- und der Schlupföffnung. Dadurch ist gewährleistet, dass der rastelementfreie Kopfbereich in die Schlupföffnung eingefädelt werden kann.

Bei einer Weiterbildung der Erfindung sind die Rastelemente sägezahnartig ausgestaltet. Dadurch kann beim Einfädeln in die Verschlussöffnung ein Widerhakeneffekt entstehen, so dass die geschlossene Ringstruktur ohne weiteres erhalten bleibt und das Wiederöffnen des Befestigungsbandes nicht selbstständig erfolgen kann.

Besonders bevorzugt ist eine sich längs einer Bandkörper-Längsachse erstreckende Breite der Verschlussöffnung und vorzugsweise auch Länge der Schlupföffnung deutlich größer als die Dicke des Bandkörpers. Dadurch wird verhindert, dass die Rastelemente, insbesondere in Gestalt der Rastzähne, beim Durchfädeln durch die Verschlussköffnung ausreißen, wie es beispielsweise bei einer lediglich schlitzförmig ausgebildeten Verschlussöffnung der Fall wäre.

In besonders bevorzugter Weise weist der Bandkörper einen Aufdruck mit Verbraucherinformationen auf. Das Befestigungsband kann also durchaus eine derartige Breite aufweisen, das solche Aufdrucke aufbringbar und dann deutlich lesbar bzw. erkennbar sind. Beispielsweise ist ein vollflächiger Aufdruck bzw. eine vollflächige Bedruckung möglich. Die Verbraucherinformationen können aus Schrift und/oder Zeichen und/oder Symbolen und/oder Motiven oder dergleichen bestehen.

Zweckmäßiger Weise besteht das Befestigungsband aus reißfestem Kunststoffmaterial. Das Kunststoffmaterial kann durchscheinend ausgestaltet sein.

Ferner ist es zweckmäßig, das Kunststoffmaterial UV-beständig auszugestalten.

Ein bevorzugtes Ausführungsbeispiel der Erfindung ist in der Zeichnung dargestellt und wird im Folgenden näher erläutert. In der Zeichnung zeigen:
- Figur 1: eine perspektive Darstellung eines bevorzugten Ausführungsbeispiel des erfindungsgemäßen Befestiungsbandes in Gebrauchslage an einer Steckdosenleiste,

- Figur 2: eine perspektivische Ansicht von unten auf das Befestigungsband von Figur 1,
- Figur 3: eine perspektive Darstellung des Befestigungsbandes im geschlossenen Zustand,
- Figur 4: eine Draufsicht auf das Befestigungsband von Figur 3 und
- Fig. 5: ein verkleinerte Darstellung des Befestigungsbandes in Draufsicht in geöffnetem Zustand.

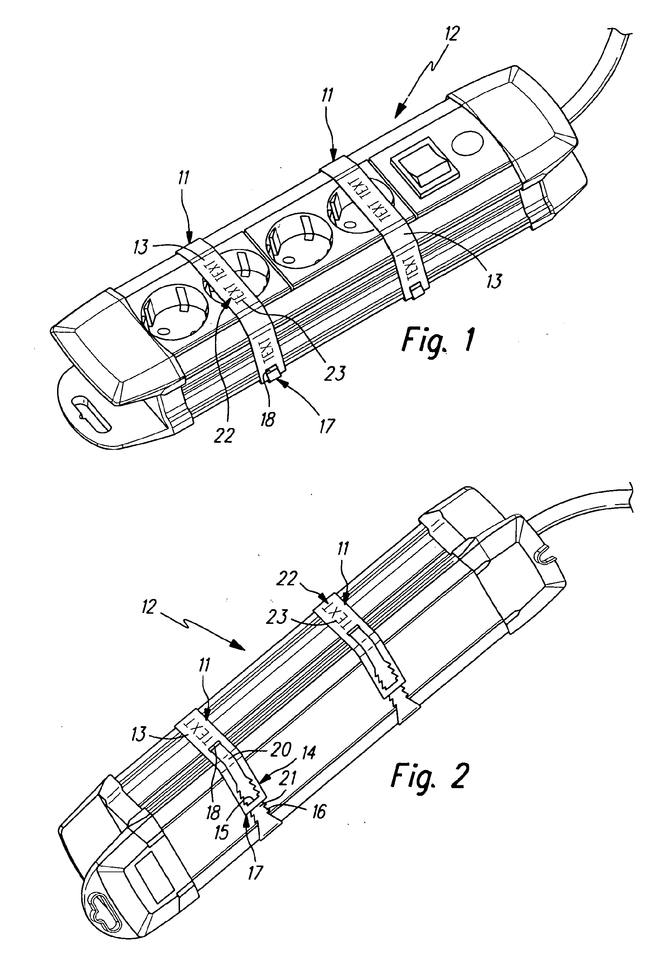

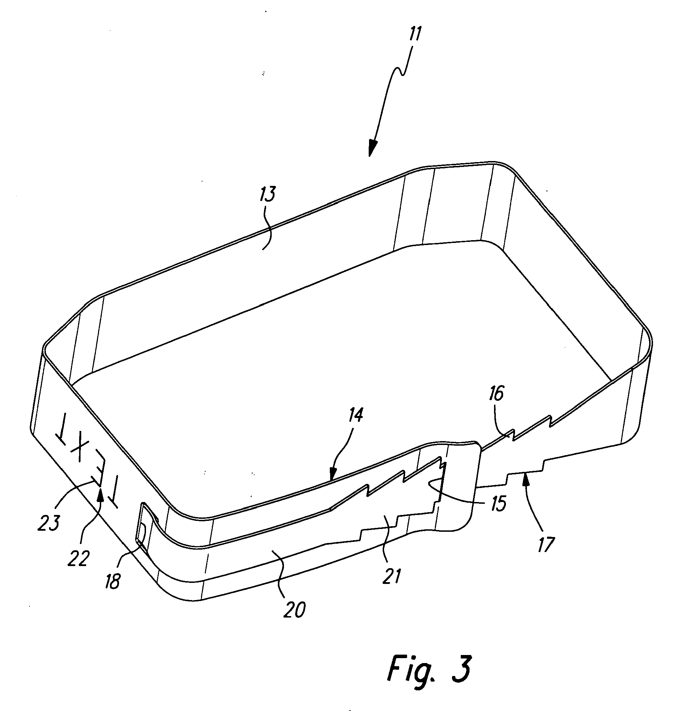

Die Figuren 1 bis 5 zeigen ein bevorzugtes Ausführungsbeispiel des erfindungsgemäßen Befestigungsbandes 11. Es ist hier beispielhaft die Verwendung des Befestigungbandes 11 an einer Steckdosenleiste 12 gezeigt. Allerdings ist es möglich, dass das Befestigungsband 11 in seiner Gebrauchslage auch andere elektrische Bauteile umschließt.

Das Befestigungsband 11 besitzt einen Bandkörper 13 mit im wesentlichen konstanter Dicke aus biegeflexiblem Bandmaterial. Als Bandmaterial eignet sich reißfestes, insbesondere folienartig dünnes Kunststoffmaterial. Geeignet ist beispielsweise Polypropylen. Das Kunststoffmaterial kann durchscheinend, also opak oder milchglasartig ausgebildet sein. Das Kunststoffmaterial ist ferner UV-beständig und alterungsbeständig.

Der Bandkörper 13 weist einen Endabschnitt 14 auf, dem eine Verschlussöffnung 15 zugeordnet ist, in die ein dem Endabschnitt gegenüberliegender, mit Rastelementen 16 versehener Rast-Endabschnitt 17 des Bandkörpers 13 rastend einführbar ist. Dadurch kann das Befestigungsband 11 in eine das elektrische Bauteil, insbesondere die Steckdosenleiste 12, als geschlossene Ringstruktur umschließende Gebrauchslage überführt werden.

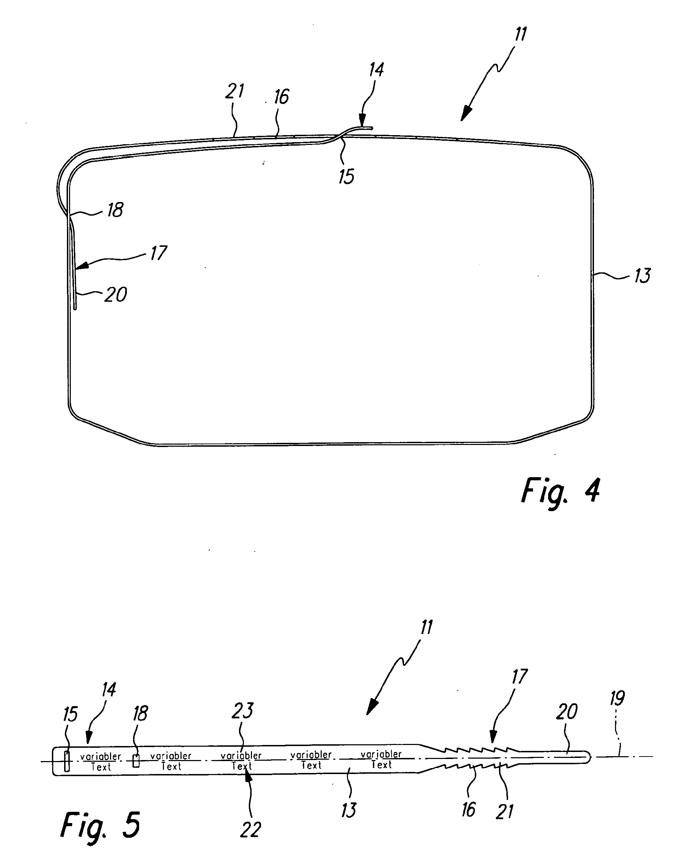

Im Bereich des Endabschnitts 14, an dem die Verschlussöffnung 15 angeordnet ist, befindet sich, mit Abstand hinter der Verschlussöffnung 15 angeordnet, eine Schlupföffnung 18 zur Aufnahme des in der Gebrauchslage über die Verschlussöffnung 15 hinausstehenden Bereichs des gegenüberliegenden Rast-Endabschnitts 17 des Bandkörpers 13. Wie insbesondere in Figur 5 gezeigt, ist eine sich längs einer Band-Längsachse 19 erstreckende Länge der Verschlussöffnung 15 und vorzugsweise auch Schlupföffnung 18 deutlich größer als die Dicke des Bandkörpers 13. Verschlussöffnung 15 und Schlupföffnung 18 sind unmittelbar im Bandkörper 13 angeordnet und lassen sich daher in einfacher Weise durch Ausstanzen oder Ausschneiden herstellen, insbesondere da das Befestigungsband 11 vorzugsweise aus Kunststoff-Folie besteht.

Der dem verschlussöffnungseitigen Endabschnitt 14 gegenüberliegende Rast-Endabschnitt 17 ist charakteristisch ausgebildet. Hier ist ein frei von Rastelementen 16 ausgebildeter Kopfbereich 20 vorgesehen, an den sich ein mit den Rastelementen 16 versehender Rastbereich 21 anschließt. Die Rastelemente 16 liegen in der Bandkörperebene, erstrecken sich also nicht in Höhenrichtung des Bandkörpers, wodurch der Bandkörper auch im Rastbereich 21 vollkommen flach ausgebildet ist. Die Rastelemente 16 sind nach Art von Sägezähnen ausgestaltet, wobei im Rastbereich 21 jeweils zwei an den entgegengesetzten Längsseiten des Bandkörpers 13 angeordnete Sägezahn-Reihen vorgesehen sind. Dabei sind die Sägezähne derart ausgerichtet, dass sie sich vom rastelementfreien Kopfbereich 20 aus weg verbreitern. Dadurch entsteht beim Schließen des Befestigungsbandes ein Widerhakeneffekt.

Ferner ist die Breite des Bandkörpers 13 im Bereich des Rast-Endabschnitts 17 kleiner als am Rest des Bandkörpers 13.

Der Bandkörper 13 ist ferner mit einem Aufdruck 22 bzw. mit einer Bedruckung mit Verbraucherinformationen versehen. Als Verbraucherinformationen können beispielsweise Schrift 22, Zeichen, Symbole und Motive vorgesehen werden. Zweckmäßigerweise ist hier die Anbringung des Firmennamens und eines Produktzeichens bzw. eine Marke der Produktlinie. Alternativ ist es jodoch auch möglich, durch Schrift 22 den Einsatzzweck der Steckdosenleiste 12 und/oder Warnhinweise anzugeben.

Figur 5 zeigt das Befestigungsband 11 in seiner Nichtgebrauchslage, in der es vollständig flach ausgebildet ist. Um das Befestigungsband 11 in seine Gebrauchlage zu bringen, bei der es dann mit einer geschlossenen Ringstruktur die Steckdosenleiste 12 umschließen kann, wird zunächst der Bandkörper 13 gebogen, damit der rastelementfreie Kopfbereich 20 in die Verschlussöffnung 15 eingefädelt werden kann. Das Einfädeln erfolgt von der späteren Unterseite des Befestigungsbandes 11 her, wodurch der rastelementfreie Kopfbereich durch die Verschlussöffnung 15 hindurchgefädelt wird und an der späteren Außenseite des Befestigungsbandes 11 wieder austritt. Als nächstes wird nun am durchgefädelten Abschnitt des Kopfbereichs 20 gezogen bis der mit den Rastelementen 16 versehene Rastbereich 21 zur Verschlussöffnung 15 gelangt. Die Breite des Rastbereichs 21 ist dabei infolge der nach außen abstehenden Rastelemente 16 in Form der Sägezähne größer als die Breite der Verschlussöffnung 15. Die Rastelemente 16 können jedoch trotzdem durch die Verschlussöffnung 15 hindurchgezogen werden, da sie sich elastisch verformen können, wodurch sie durch die Verschlussöffnung 15 passen. Dies wird auch dadurch unterstützt, dass sich die sägezahnartigen Rastelemente 16 vom Kopfbereich weg mittels einer Schräge verbreitern, die ein einfaches Durchfädeln durch die Verschlussöffnung 15 gewährleistet. Je nach dem welcher Umfang die Steckdosenleiste 12 hat, wird das Befestigungsband 11 mehr oder weniger weit festgezurrt, wobei mehr oder weniger Rastelemente durch die Verschlussöffnung hindurchgefädelt werden. Dadurch ensteht eine geschlossene Ringstruktur, die die Steckdosenleiste 12 umschließt und beispielsweise das an der Steckdosenleiste 12 angebrachte Netzkabel fixiert. Der durch die Verschlussöffnung 15 hindurchgefädelte Teil des Kopfbereichs 20 wird dann durch die Schlupföffnung 18 hindurchgefädelt, so dass das freie Ende des Rast-Endabschnitts 17 an der in der Gebrauchslage befindlichen Rückseite des Befestigungsbandes 11 liegt. Um dies zu bewerkstelligen, ist der Abstand zwischen der Verschlussöffnung und der Schlupföffnung 18 kleiner als die Länge des Kopfbereichs 20. So kann auch bei Einrasten des lediglich vordersten Rastelementes 16 ein Durchfädeln durch die Schlupföffnung 18 durchgeführt werden.

## Patentansprüche

1. Befestigungsband für elektrische Bauteile, insbesondere Steckdosenleisten (12) oder dergleichen, mit einem Bandkörper (13) mit im Wesentlichen konstanter Dicke aus biegeflexiblem Bandmaterial, dessen einem Endabschnitt (14) eine Verschlussöffnung (15) zugeordnet ist, in die ein dem Endabschnitt (14) gegenüberliegender, mit Rastelementen (16) versehener Rast-Endabschnitt (17) rastend einführbar ist, wodurch das Befestigungsband (11) in eine das elektrische Bauteil als geschlossene Ringstruktur umschließende Gebrauchslage überführbar ist, **dadurch gekennzeichnet, dass** die Verschlussöffnung unmittelbar am Bandkörper (13), diesen quer zu einer Bandkörperebene durchsetzend, ausgebildet ist.

2. Befestigungsband nach Anspruch 1, **dadurch gekennzeichnet, dass** der Bandkörper (13) eine mit Abstand hinter der Verschlussöffnung (15) angeordnete Schlupföffnung (18) zur Aufnahme des in der Gebrauchslage über die Verschlussöffnung (15) hinausstehenden Teiles des Rast-Endabschnitts (17) aufweist.

3. Befestigungsband nach Anspruch 1 oder 2, **dadurch gekennzeichnet, dass** der Rast-Endabschnitt (17) einen frei von Rastelementen (16) ausgebildeten Kopfbereich (20) aufweist, an den sich ein mit den Rastelementen (16) versehener Rastbereich (21) anschließt.

4. Befestigungsband nach Anspruch 3, **dadurch gekennzeichnet, dass** der rastelementfreie Kopfbereich (20) mindestens so lang ist, wie der Abstand zwischen der Verschluss- und der Schlupföffnung (15, 18).

5. Befestigungsband nach einem der vorhergehenden Ansprüche,
**dadurch gekennzeichnet, dass** sich die Rastelemente (16) in der Bandkörperebene erstrecken.

6. Befestigungsband nach einem der vorhergehenden Ansprüche,
**dadurch gekennzeichnet, dass** die Rastelemente (16) sägezahnartig ausgestaltet sind.

7. Befestigungsband nach einem der vorhergehenden Ansprüche,
**dadurch gekennzeichnet, dass** die Breite des Bandkörpers (13) im Bereich des Rast-Endabschnitts (17) kleiner ist als am Rest des Bandkörpers (13).

8. Befestigungsband nach einem der vorhergehenden Ansprüche, **dadurch gekennzeichnet, dass** eine sich längs einer Band-Längsachse (19) ersteckende Länge der Verschlussöffnung (15) und vorzugsweise auch Länge der Schlupföffnung (18) deutlich größer ist als die Dicke des Bandkörpers (13).

9. Befestigungsband nach einem der vorhergenden Ansprüche,
**dadurch gekennzeichnet, dass** der Bandkörper (13) einen Aufdruck (22) mit Verbraucherinformationen aufweist.

10. Befestigungsband nach einem der vorhergenden Ansprüche, **dadurch gekennzeichnet, dass** das Befestigungsband (11) aus reißfestem Kunststoffmaterial besteht.

11. Befestigungsband nach Anspruch 10, **dadurch gekennzeichnet, dass** das Kunststoffmaterial durchscheinend ausgestaltet ist.

12. Befestigungsband nach einem der Ansprüche 10 oder 11,
**dadurch gekennzeichnet, dass** das Kunststoffmaterial UV-beständig ist.
